# EUROPEAN PATENT SPECIFICATION

(11) **EP 1 049 991 B1**
(45) Date of publication and mention of the grant of the patent: **13.11.2002**
(21) Application number: 99901150.5
(22) Date of filing: 22.01.1999
(51) Int. Cl.: G06F 17/30, G06F 17/21

(54) **SCORING OF TEXT UNITS**
BEWERTEN VON TEXTEINHEITEN
DENOMBREMENT D'UNITES DE TEXTE

(30) Priority: 29.01.1998 GB 9801784
(43) Date of publication of application: 08.11.2000
(73) Proprietor: Sharp Kabushiki Kaisha, Osaka-shi, Osaka 545-8522 (JP)
(72) Inventor: SANFILIPPO, Antonio, Pietro, Cambridge, MA 02138 (US)
(74) Representative: Suckling, Andrew Michael
(86) International application number: JP9900259
(87) International publication number: WO99039282

(56) References cited:
- EP-A- 0 741 364
- EP-A- 0 810 535
- WO-A-95/14973
- SONDERLAND ET AL: "Wrap-up: a Trainable Discourse Module for Information Extraction" JOURNAL OF ARTIFICIAL INTELLIGENCE RESEARCH, no. 2, 1 January 1994, page 131 158 XP002077091

## Description

### TECHNICAL FIELD

The invention relates to a method and a system for scoring text units (e.g. sentences), for example according to their contribution in defining the meaning of a source text (textual relevance), their ability, to form a cohesive subtext (textual connectivity) or the extent and effectiveness to which they address the different topios which characterise the subject matter of the text (topic aptness).

### BACKGROUND ART

When abridging a text it is desirable to select a portion of the text which is most representative in that it contains as many of the key concepts defining the text as possible (textual relevance). As an example, EP-A-741364(Xerox Corp.) disclosed a method of selecting key phrases from a machine readable document by (a) generating from the document a multiplicity of candidate phrases (units of more than one word), followed by (b) selecting as key phrases a subset of the candidate phrases. This selectlon, known as summarisation, may also take into consideration the degree of textual connectivity among sentences so as to minimise the danger of producing summaries which contain poorly linked sentences.

Computing lexical cohesion for all pair-wise text unit combinations in a text provides an effective way of assessing textual relevance and connectivity in parallel, see for example Hoey M. (1991) Patterns of Lexis in Text. OUP, Oxford, UK: and Collier A. (1994) A System for Automatic Concordance Line Selection. NEMLAP 1994, Manchester, UK. A simple way of computing a lexical cohesion for a pair of text units is to count non-stop words which occur in both text units. Non-stop words can be intuitively thought of as words which have high informational content. They usually exclude words with a very high frequency of occurrence, e.g. closed class words such as determiners, preposition and conjunctions, see for example, Fox, C. (1992) Lexical Analysis and Stoplists, in Frakes W and Baeza-Yates R (eds) Information Retrieval: Data Structures & Algorithms. Prentice Hall, Upper Saddle River, NJ, USA, pp 102-130.

A sample list of stop words is given below:-
a about above across after again against all almost alone along already also although always among and another any anybody anyone anything anywhere are area areas around as ask asked asking asks at away b back backed backing backs be became because become becomes been before began behind being beings best better between big both but by c came can cannot case cases certain certainly clear clearly come could d did differ different differently do does done down downed downing ....... v very w want wanted wanting wants was way ways we well wells went were what when where whether which while who whole whose why will with within without work worked working works would x y year years yet you young younger youngest your yours z

Text units which contain a greater number of shared non-stop words are more likely to provide a better abridgement of the original text for two reasons:
the more often a word with high informational content occurs in a text, the more topical and germane to the text the word is likely to be, and
the greater the times two text units share a word, the more connected they are likely to be.

As an illustrative example, consider the ranking of the following sample text, where digits surrounded by hash characters (#) are text unit indexes.
- #1#: Report: Apple looking for a Partner
- #2#: NEW YORK (Reuter) - Apple is actively looking for a friendly merger partner, according to several executives close to the company, the New York Times said in Thursday.
- #3#: One executive who does business with Apple said Apple employees told him the company was again in talks with Sun Microsystems, the paper said.
- #4#: On Wednesday, Saudi Arabia s Prince Alwaleed Bin Talal Bin Abdulaziz Al Saud said he owned more than five percent of the computer maker s stock, recently buying shares on the open market for a total of $115 million.
- #5#: Oracle Corp Chairman Larry Ellison confirmed on March 27 he had formed an independent investor group to gauge interest in taking over Apple.
- #6#: The company was not immediately available to comment.

To compute lexical cohesion according to the method suggested by Hoey, (see above reference), all unique pairwise combinations of text units are scored according to how many words they share, as shown in the table below.

| Text unit pairs | | Words shared | Score |
|---|---|---|---|
| #1# | #2# | Apple, look, partner | 3 |
| #3# | #5# | Apple, Apple | 2 |
| #1# | #3# | Apple, Apple | 2 |
| #3# | #6# | company | 1 |
| #1# | #4# | | 0 |
| #4# | #5# | | 0 |
| #1# | #5# | Apple | 1 |
| #4# | #6# | | 0 |
| #1# | #6# | | 0 |
| #5# | #6# | | 0 |
| #2# | #3# | Apple, Apple, executive, company | 4 |
| #2# | #4# | | 0 |
| #2# | #5# | Apple | 1 |
| #2# | #6# | company | 1 |
| #3# | #4#. | | 0 |

The number of shared words (including multiple occurrences of the same word) in each text unit pair provides the individual score for that pair. For example, the individual scores for all pairs involving text unit #2# are:-

**Table 1**

| | #1# | #2# | #3# | #4# | #5# | #6# |
|---|---|---|---|---|---|---|
| #2# | 3 | - | 4 | 0 | 1 | 1 |

The final score for a given text unit is obtained by summing the individual scores for that text unit. According to Hoey (see above reference), the number of links (e.g. shared words) across two text units must be above a certain threshold for the two text units to achieve a lexical cohesion rank. For example, if only individual scores greater than 2 are taken into account, the final score for text unit #2# is (3+4=) 7. Proceeding in the same way, the final scores for text units #1# and #3# are 3 and 4 respectively.

Such a scoring provides the following ranking:
first: text unit #2# (final score: 7);
second: text unit #3# (final score: 4); and
third: text unit #1# (final score: 3).

A text abridgement can be obtained by selecting text units in ranking order according to the text percentage specified by the user. For example, a 35% abridgement of the text (ie. an abridgement of up to 35% of the total number of text units in the sample text) would result in the selection of text units #2# and #3#.

Further details about lexical cohesion and the ways in which it can be used to aid summarisation can be found in Hoey and Collier references mentioned above.

Other prior art on related technology includes, Doi (1991) Method and apparatus for producing an abstract of a document- US patent 5077668; Ukita et al. (1993) Digital Computing Apparatus for Preparing Document Text - US patent 5257186; Withgott et al. Method and apparatus for Summarising documents according to theme - US patent 5384703; and Pedersen, J. & J. Tukey (1997) Method and Apparatus for Automatic Document Summarisation - US patent 5638543.

### DISCLOSURE OF INVENTION

It is an object of the invention to provide a method and system for ranking text units which overcomes at least some of the disadvantages of the prior art.

According to the invention there is provided a method of operating a data processing system on a text including a plurality of text units, each including one or more strings, the method including the steps of:
forming a structure for each of at least some of said strings, in which structure the string is associated with each text unit in which the string occurs;
for each text unit summing the number of occurrences of each other text unit in the same structure or structures so as to form an individual score for each pair of text units; and
processing said individual scores for each text unit in order to form a final score for each text unit.

The use of such structures considerably reduces the time taken to operate on the text because it is no longer necessary to count the number of strings shared between all possible pairs of text units in turn.

More specifically, the degree of connectivity of a text unit with all other text units in a text can be simply assessed by quantifying the elements (e.g. words) which each text unit shares with pairs built by associating each element in the text with the list of pointers to the text units in which the element occurs. This provides a significant advantage in terms of processing speed when compared to a method such as the one described by Hoey (1991) and Collier (1994) where the same assessment is carried out by computing all pairwise combinations of text units. In particular, the word-per-second processing rate is significantly less affected by text size.

The method may include the further step of ranking the text units on the basis of said individual scores.

In one embodiment of the invention, said text units are sentences, said strings are words forming said sentences, and the method includes the additional steps of removing stop-words, stemming each remaining word and indexing the sentences prior to carrying out said summing step, and said structures are stem-index records each including a stemmed word and one or more indexes corresponding to sentences in which said stemmed word occurs.

In an alternative embodiment, said text is associated with a word text including words, each word being associated with one or more subject codes representing subjects with which said word is associated, and said strings are subject codes associated with said words.

In this case the method may comprise the further step of keeping a record of the word spelling associated with each occurrence of a subject code in a text unit, and during said summing step disregarding occurrences of the same subject code in a pair of text units if the same word spelling is associated with said same subject code in said pair of text units.

It will be appreciated that each word may have a number of possible subject codes, some of which are contextually inappropriate for the context in which the word is being used. The last-mentioned feature allows the method to perform disambiguation of the subject codes, by disregarding occurrences of subject codes which are contextually inappropriate, as will be described in greater detail below.

Said step of disregarding occurrences of subject codes may not be carried out for subject codes which relate to only a single word spelling in the word text.

Said processing step may include calculating a level for each text unit, in addition to said final scorc, and said level may indicate the value of the highest of said individual scores in relation to a threshold value.

This allows text units to be ranked first according to level, and second according to said final score, if desired.

The invention also provides a storage medium containing a program for controlling a programmable data processor to perform the method described above.

The invention also provides a system for ranking text units in a text, the system including a data processor programmed to perform the steps of the method described above.

### BRIEF DESCRIPTION OF DRAWINGS

Preferred embodiments of the invention will now be described, by way of example only, with reference to the accompanying drawings, in which:
Figure 1 shows a flow chart outlining some of the steps involved in a preferred embodiment of the invention.
Figure 2 shows a flow chart which is a continuation of the flow chart of Figure 1; and
Figure 3 shows an apparatus suitable for carrying out the methods described below.

### BEST MODE FOR CARRYING OUT THE INVENTION

In an embodiment of the invention described below the ranking of text units is carried out with reference to the presence of shared words across text units. The assessment of textual relevance and connectivity can both be carried out by counting shared links (e.g. identical words) across all text unit pairs. The method makes it possible to perform this assessment by quantifying the elements (e.g. words) which each text unit shares with stem-index pairs, each such pair comprising an element in the text and a list of pointers to the text units in which the element occurs. This technique makes it possible to rank text units at a processing rate which is significantly less affected by text size than a system where the same assessment is carried out by computing all pair wise combinations of text units.

The ranking is done by assessing
how germane each text unit is to the source text (textual relevance);
how well connected each text unit is to other text units in the source text (textual connectivity): and
how well each text unit represents the various topics dealt with in the source text (topic aptness).

In a further embodiment described below, the same technique is used for assessment of topic aptness. Shared links across text units are verified in terms of overlapping semantic codes associated with words (e.g. the connotations business and government for the word executive) with reference to a dictionary or thesaurus database providing a specification of such codes for word entries.

The method can be divided into two phases, namely a preparatory phase, followed by a ranking phase. In the preparatory phase the text undergoes a number of normalisations which have the purpose of facilitating the process of computing lexical cohesion. This phase includes the following operations:
text segmentation;
removal of formatting commands:
recognition of proper names;
recognition of multi-word expressions;
removal of stop words; and
word tokenization.

Further ways of normalizing the input text are also mentioned later in the specification.

The object of segmentation is to partition the input text into text units which stand on their own (e.g. sentences, titles, and section headings) and to index such text units, for example as shown in the sample text given above.

Next, formatting commands such as the HTML (hyper-text mark-up language) mark-ups in the text are dealt with.

The sample text including HTML formatting commands looks like the following:-
<h2>Report: Apple Looking for a Partner</h2>
<! TextStart -->
<p>
NEW YORK (Reuter) - Apple is actively looking for a friendly merger partner, according to several executives close to the company, the New York Times said on Thurs day.
<p>
One executive who does business with Apple said Apple employees told him the company was again in talks with Sun Microsystems, the paper said.
<p>
On Wednesday, Saudi Arabia s Prince Alwaleed Bin Talal bin Abdulaziz Al Saud said he owned more than five percent of the computer maker s stock, recently buying shares on the open market for a total of $115 million.
<p>
Oracle Corp Chairman Larry Ellison confirmed on March 27 he had formed an independent investor group to gauge interest in taking over Apple.
<p>
The Company was not immediately available to comment.
<!--TextEnd -->

In the present embodiment, the formatting commands are simply removed, but alternative treatments are mentioned below.

A facility for recognizing proper names and multi-word expressions is also included. Such a facility makes it possible to process expressions such as Apple. New York, New York Times, gauge interest as single units which should not be further tokenized. The recognition of such units ensures that expressions which superficially resemble each other, but have different meanings - e.g. Apple (the company) and apple (the fruit), or York in New York (the city) and New York Times (the newspaper) - do not actually generate lexical cohesion links. For further information relating to recognising proper nouns and multi-word expressions reference can be made respectively to David McDonald (1996) Internal and External Evidence in the Identification and Semantics Categorization of Proper Names, In B. Boguraev and J. Pustejovsky (eds) Corpus Processing for lexical Acquisition, MIT Press end Justeson, J. S. and Katz, S.M. 1995. Technical terminology; some linquistic properties and an alorithm for identification in text. In Natural Language Engineering, 1:9--27.

Next, all words in the input text which match stop words, such as those mentioned above, are removed. This step ensures that words which are low in informational content are not taken into account when assessing lexical cohesion. After stop-word removal, the calculation of shared words across text units is further optimized by tokenizing non-stop words. Word tokenization is achieved by reducing words into stems or citation forms, e.g.

| *Input strings* | *stems* | *citation forms* |
|---|---|---|
| actively looking | activlook | active look |

Citation forms generally correspond to the manner in which words are listed in conventional dictionaries, and the process of reducing words to citation form is referred to as lemmatisation. Reduction of words to stem form generally involves a greater truncation of the word in which all inflections are removed. The purpose of reducing words of stems or citation forms is to achieve a more effective notion of word sharing, e.g. one which abstracts away from the effects of inflectional and/or derivational morphology. Stemming provides a very powerful word tokenization technique as it undoes both derivational and inflectional morphology. For example, stemming makes it possible to capture the similarity between the words nature, natural, naturally, naturalize, naturalizing as they all reduce to the stem natur. Word reduction to citation form would only capture the relationship between naturalize and naturalizing. In the present embodiment, stemming will be used. For a description of some stemming techniques reference can be made to, Frakes W. (1992) Stemming Algorithms, in Frakes W and Baeza-Yates R (eds) Information Retrieval: Data Structures & Algorithms. Prentice Hall, Upper Saddle River, NJ, USA, pp. 131-160. For further information relating to lemmatisation reference can be made to Hadumod Bussmann (1996) Routledge Dictionary of Language and Linguistics, Routledge, London. P.272 Following the stages of stop-word removal and stemming, the sample text is as shown below.
- #1#: report Apple look partner
- #2#: New-York Reuter Apple activ look friend merger partner accord execut close company New-York-Times Thursday
- #3#: execut busy Apple Apple employ tell company talk Sun-Microsystems paper say
- #4#: Wednesday Saudi-Arabia Prince Alwaleed-Bin-Talal-Bin-Abdulaziz-Al-Saud own percent computer maker stock recent buy share market total 115 million
- #5#: Oracle-Corp Chairman Larry-Ellison confirm March 27 form independent investor gauge-interest take-over Apple
- #6#: company immediat avail comment

Following the preparatory phase described above, the textual relevance and connectivity of each text unit is assessed by measuring the number of stems which the text unit shares with each of the other text units in the sample text. The ranking process comprises two main stages: the indexing of tokenized words, and the scoring of tokenized words in text units.

In the first stage, all stems in the normalized text, which has undergone the preparatory phase described above, are indexed with reference to the text units in which they occur. For example, Apple occurs five times in four of the text units in the normalised text: once in #1#, #2#, #5# and twice in #3#. Consequently, a record is made where Apple is associated with these text unit indexes:
<Apple {#1#, #2#, #3#, #3#, #5#}>

A similar record is made for each other stem in the normalised text, each record being referred to as a stem-index record.

A final text unit score is calculated for each text unit using the list of stem-index records resulting from the indexing stage described above. The objective of such a scoring process is to register how often the tokenized words from a text unit occur in each of the other text units. In performing this assessment, provisions are made for a threshold which specifies the minimal number of links required for text units to be considered as lexically cohesive. The recursive scoring procedure is used to generate the final scores for each text unit makes use of the following variables.
- TRSH: is the lexical cohesion threshold
- TU: is the current text unit
- LC^{TU}: is the current lexical cohesion score of TU (i.e. LC^{TU} is the count of tokenized words TU shares with some other text unit).
- CLevel: is the level of the current lexical cohesion score calculated as the difference between LC^{TU} and TRSH
- Score: is the lexical cohesion score previously assigned TU (if any)
- Level: is the level for the lexical cohesion score previously assigned to TU (if any)

The scoring procedure makes use of a scoring structure <level, TU, Score>, and is repeated for each text unit in turn, in order to produce the final score for the text unit TU (ie. the final value of LC^{TU} in the scoring structure). The procedure can then be repeated for other text units TU. The recursive scoring procedure used in this exemplary embodiment is as follows.

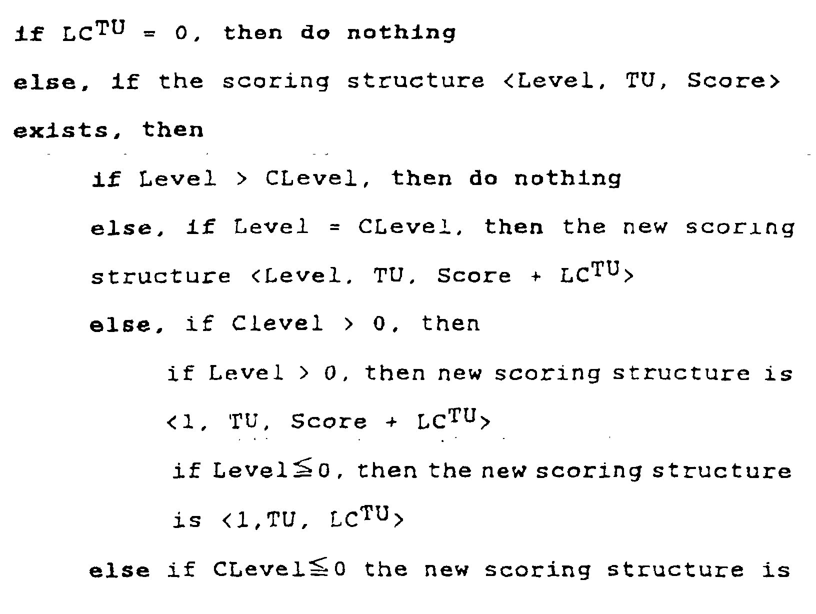

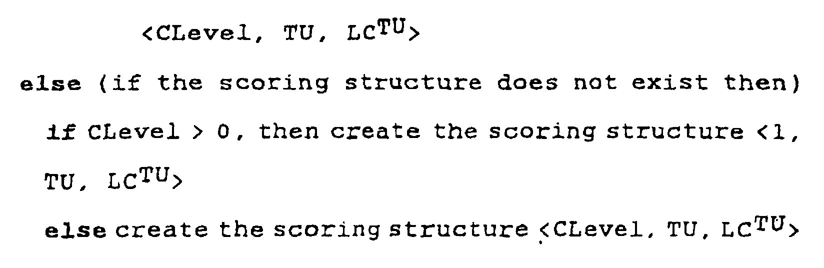

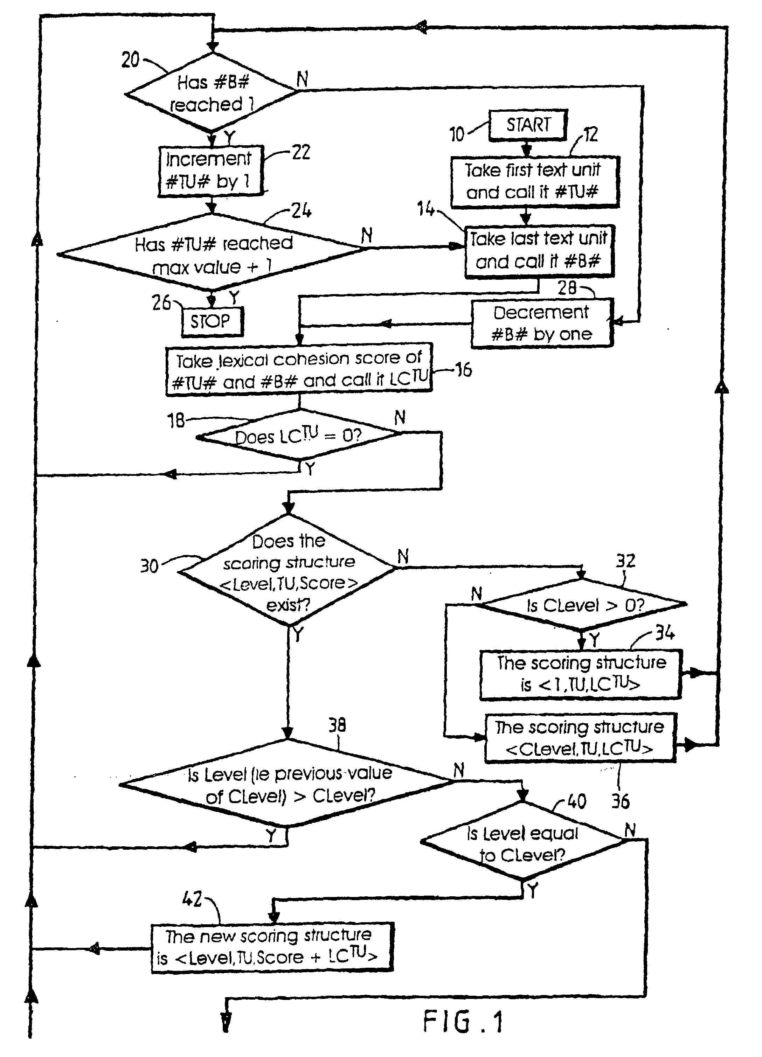

The above procedure can be more readily understood by referring to Figure 1, which shows the procedure in the form of a flow chart. In the flow chart decisions are indicated by diamond-shaped boxes. If the answer to the question within the box is yes , the procedure follows the arrow labelled Y at the bottom of the box, other wise the procedure follows the arrow labelled N at one of the sides of the box.

The start of the procedure is indicated by step 10. In step 12 the index of the first text unit of the normalised text is taken and represented by #TU#. In step 14 the index of the last text unit is taken and represented by #B#. In the sample text given above, the last text unit is text unit #6#. The procedure then flows to step 16 where the lexical cohesion score of #TU# and #B# is calculated and assigned to LC^{TU}. This lexical cohesion score is the individual score referred to above and shown in Table 1. However, the manner in which it is calculated differs from that described above, and will now be described.

Suppose for example, we are scoring text unit #2# (ie. #TV# = #2#) with a lexical cohesion threshold of 2. First, all stem-index records whose stem is present in text unit #2# are selected, as shown below.
<Apple {#1#, #2#, #3#, #3#, #5#}>
<company {#2#, #3#, #6#}>
<execut {#2#, #3#}>
<look {#1#, #2#}>
<partner {#1#, #2#}>

Stems which are associated with only one text unit index are eliminated from this list as they simply occur in text unit, but do not connect a pair of text units.

Then a tuplet is formed consisting of the index for the text unit to be scored for lexical cohesion (i.e. #2#), and all the stem-index records whose stem occurs in that text unit, as shown below.
<Apple {#1#, #2#, #3#, #3#, #5#}>
<company {#2#, #3#, #6#}>
< #2# <execut {#2#, #3#}> >
<look {#1#, #2#}>
<partner {#1#, #2#}>

Next, identical index occurrences in the tuplet are summed together, to give the following results.

**Table 2**

| | #1# | #2# | #3# | #4# | #5# | #6# |
|---|---|---|---|---|---|---|
| #2# | 3 | - | 4 | 0 | 1 | 1 |

Index occurrences referring to the text unit being assessed (i.e. #2#) are not counted as they do not register lexical cohesion (thus the second entry in the table is blank).

The same procedure of forming a tuplet and summing identical index occurrences is then carried out for each other text unit. For example, the tuplet for text unit #6# is:-
<#6# <company {#2#, #3#, #6#}>>

This is simpler than the tuplet for text unit #2# because company is the only stem which text unit #6# shares with any other text unit. This tuplet gives the

**Table 3**

| | #1# | #2# | #3# | #4# | #5# | #6# |
|---|---|---|---|---|---|---|
| #6# | 0 | 1 | 1 | 0 | 0 | - |

This method is considerably faster than that of the prior art because it does not involve a comparison of every pair of text units for each word in the sample text.

The final cohesion score of text units #2# and #6# is calculated by applying the scoring procedure of Figure 1 to each row in table 2 and table 3 respectively. Scoring a text unit according to this procedure involves adding the individual scores which are either above a threshold (for Level 1), or below the threshold and of the same magnitude (for lower levels) (The use of Levels in the procedure is discussed below).

Having discussed the way in which individual lexical cohesion scores (for each text unit pair) are calculated in step 16 using tuplets, we shall return to Figure 1 to follow the procedure for calculation of the final lexical cohesion score for each text unit. However, before returning to Figure 1 it is noted that the simplest way of forming the final score would be to sum the individual scores for each text unit (i.e. for #2# and #6#, sum each row in Tables 2 and 3 above), whilst ignoring all individual scores below a certain threshold value. However, the procedure of Figure 1 goes further in that it determines not only a final score for each text unit, but also a level for each text unit, as discussed below.

The highest level is 1, which indicates that the greatest individual score (for a given text unit) is above the threshold. The final score for that text unit is then simply the sum of all individual scores (for that text unit) which are above the threshold.

The meanings of level 1 and the next three levels below level 1, and the ways in which the final score for these levels is calculated, are shown in the table below.

| Level | Meaning of Level | Final Score |
|---|---|---|
| 1 | Greatest individual score > threshold | Sum of all individual scores above threshold |
| 0 | Greatest individual score = threshold | Sum of all individual scores equal to threshold. |
| -1 | Greatest individual score = threshold -1 | Sum of all individual scores equal to threshold - I |
| -2 | Greatest individual score = threshold -2 | Sum of all individual scores equal to threshold - 2 |

It will be seen that if threshold = 0, only level 1 exists, and the final score for a given text unit is simply the sum of all individual scores for that text unit. In fact the total number of levels is equal to the threshold + 1.

Some examples of individual scores, and the levels and final scores they produce (by following the procedure of Figure 1) for a threshold of 2 are given below.

| Individual scores | Level | Final Score |
|---|---|---|
| 2 0 2 0 1 | 0 | 4 |
| 1 1 0 0 0 | -1 | 2 |
| 5 6 2 0 0 | 1 | 11 |
| 1 1 1 1 1 | -1 | 5 |

The purpose of calculating a level for each text unit is to allow the text units to be ranked first according to level (highest level first) and second according to final score (highest final score first). In this way, text units having no individual scores above the threshold are not necessarily ignored in the subsequent summarisation process.

Returning to Figure 1, in step 18 the procedure branches into two depending on whether LC^{TU} = 0, where LC^{TU} is the lexical cohesion score of the text unit currently being considered. A lexical cohesion score of zero between two text units (ie. LC^{TU}=0) indicates that the two text units do not share any stems. If LC^{TU} = 0 then the procedure goes to step 20. As discussed below, the text unit index #B# is decremented by 1 at step 28 during each cycle of the procedure. At step 20, if #B# has reached 1 then #TU# is incremented by 1 in step 22. That is, the next text unit (in this case #2#) is assigned to #TU#. In step 24 the procedure is stopped (at step 26) if #TU# has reached the maximum value +1 (i.e. 6+1=7 for our sample text), otherwise control passes back to step 14.

At step 20, if #B# has not yet been decreased to the first text unit (i.e. #1#) then control passes to step 28, in which #B# is decremented by 1 (ie. the next lower text unit is assigned to #B#.

It will therefore be seen that the effect of steps 10 to 28 is to calculate the individual lexical cohesion scores for all pairs of text units.

Returning to step 18, if LC^{TU} does not equal 0, then control passes to step 30, which determines whether or not the scoring structure <Level, TU, Score> already exists. The first time that step 30 is reached no scoring structure will already exist, and control will pass to step 32, which determines whether CLevel is greater than 0. CLevel is the current value of Level and is equal to (LC^{TU} - TRSH), where TRSH is the lexical cohesion threshold, which is selected in advance. In steps 34 and 36 values are assigned to the scoring structure according to the outcome of step 32, and control then passes back to step 20.

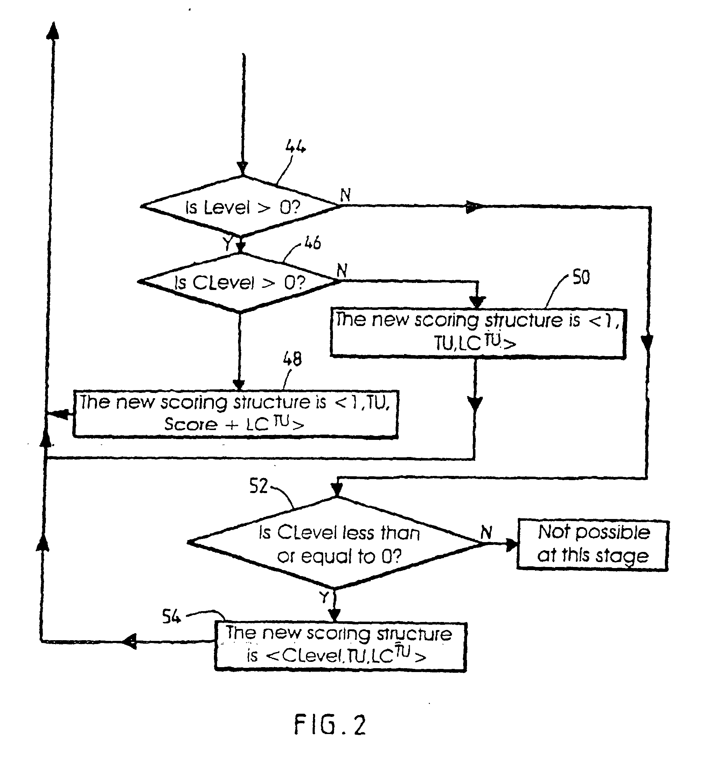

At step 30, if the scoring structure already exists (which will always be the case except for the first time step 30 is reached for each value of TU, given that the first time step 30 is reached values are assigned to the scoring structure at steps 34 and 36 as described above), control passes to step 38 which determines whether Level (i.e. the previous value of CLevel) is greater than CLevel. If so, control passes back to step 20. Otherwise, control passes to step 40, which determines whether Level is equal to CLevel. If so, new values are assigned to the scoring structure in step 42, and control passes back to step 20. Otherwise, control passes to step 44 (see Figure 2), which determines whether CLevel is greater than 0. If so, control passes to step 46, and new values are assigned to the scoring structure in step 48, or step 50, depending on whether the level is greater than 0, and control passes back to step 20. At step 44, if CLevel is not greater than 0, control passes to step 52, which determines whether CLevel is less than, or equal to, 0. If step 52 is reached, the answer to this question should always be yes, so that new values are assigned to the scoring structure in step 54, and control is passed back to step 20.

Following the procedure of Figure 1 for all text units in the sample text, and a threshold of 2, the levels and final scores assigned to each text unit are as follows: -

| Text Unit | Level | Score |
|---|---|---|
| #1# | 1 | 3 |
| #2# | 1 | 7 |
| #3# | 1 | 4 |
| #4# | - | 0 |
| #5# | 0 | 2 |
| #6# | -1 | 2 |

These provide the following ranking of text units in terms of lexical cohesion.

| Rank | Text Unit | Level | Score |
|---|---|---|---|
| 1^{st} | #2# | 1 | 7 |
| 2^{nd} | #3# | 1 | 4 |
| 3^{rd} | #1# | 1 | 3 |
| 4^{th} | #5# | 0 | 2 |
| 5^{th} | #6# | -1 | 2 |
| 6^{th} | #4# | - | 0 |

This shows the preferred order in which the text units will be selected in a summarisation process. It is noted that no level is assigned to text unit #4#, as this text unit shares no stems with any other text unit.

When used with a dictionary database providing information about the subject domain of words the method described above can be slightly modified to detect the major themes and topics of a document automatically. As an example, the words in our sample text have the following subject domain codes.

| Word | Associated Codes |
|---|---|
| actively-adv | OR |
| business-n | BZ |
| buy-v | MAR, MERG, MI |
| confirm-v | CHR |
| company-n | F,MI, SCG, TH |
| employee-n | LAB |
| executive-n | BZ, GOV |
| friendly-adj | FA, G, |
| group-n | GROU, OR, POP |
| independent-adj | CHT, FA |
| interest-n | BZ, EC, G, J, U |
| investor-n | IV, ON |
| look-v | PHYA |
| maker-n | JC |
| market-n | BZ, MAR |
| merger-n | MERG |
| open-adj | CER, PFE |
| own-v | MEN |
| paper-n | PAPP |
| partner-n | DA, F, MGE, TG |
| say-v | CN |
| stock-n | AH, AM, AP, BRE, FLW FOO, GU, IV, PM |
| take-v | EC, PG, SH, V, WRI |
| talk-n | RHE |

The meanings of these codes are given below:-

| CODE | Explanation |
|---|---|
| AH | Animal Fanning & Husbandry |
| AM | Animal Names (not taxonomic terms (TAXI) |
| AP | Anthropology & Ethnology (incl racial groups) |
| BRE | Breeds and Breeding |
| BZ | Business & Commcrce |
| CER | Ceremonies |
| CHR | Christianity |
| CHT | Character Traits (eg. meddlesome, mellow, outgoing) |
| CN | Communications (eg. telephony, telegraphy, audiovisual, information science, radio) |
| DA | Dance & Choreography |
| EC | Economics & Finance |
| F | Finance & Business |
| FA | Overseas Politics & International Relations |
| FLW | Flower Names: plants known primarily as flowers |
| FOO | Foods: all edible items |
| G | Sports (incl Games & Pastimes) |
| GOV | Government Admin & Organisations (eg reshuffles) |
| GROU | Groups of Musicians |
| GU | Guns |
| IV | Investment & Stock Markets |
| J | Crime and the Law |
| JC | Judaeo-Chrisrian Religion |
| LAB | Staff and the Workforce (incl Labour relations) |
| MAR | Marketing & Merchandising |
| MEN | Mental States & Feelings (eg. depressed, tense, non-plussed) |
| MERG | Mergers, Monopolies, Takeovers, Joint Ventures |
| MGE | Marriage, Divorce, Relationships & Infidelity |
| MI | Military (the armed forces) |
| ON | Occupations & Trades |
| OR | Organisations, Groups & Orders |
| PAPP | Paper & Stationery |
| PFE | Banking & Personal Finance |
| PG | Photography |
| PHYA | Animal physiology |
| PM | Plant Names |
| POP | Pop & Rock |
| RITE | Rhetoric & Oratory (eg. ad lib, eulogy, scripted) |
| SCG | Scouting & Girl Guides |
| SH | Clothing |
| TG | Team Games |
| TH | Theatre |
| U | Politics, Diplomacy & Government |
| V | Travei and Transport (incl. transport infrastructure) |
| WRI | Writing |

A further embodiment relating to subject analysis involves a method which is the same as that described above, except that each word is first lemmatised (rather than stemmed), and then replaced by all of the subject domain codes associated with that word'. The individual scores for pairs of text units are then calculated on the basis of shared codes rather than shared words, using code-index records, rather than stem-index records.

However, an extra (disambiguation) step is required in order to avoid (or at least reduce the chances of) counting codes which are out of context, that is codes which relate to senses of the word other than the intended sense. The disambiguation step involves dropping text unit indexes from the code-index records of tuplets if they relate to the same word as the first element (i.e. text unit index) of the tuplet. This requires that the word associated with each text unit index in each code-index record be remembered (ie. recorded) by the procedure. This procedure can be demonstrated by the following example.

In the sample text the code BZ (Business & Commerce) is associated with the words;
executive occurring once in text units #2# and #3#
business occurring once in text unit #3#
market occurring once in text unit #4#
interest occurring once in text unit #5#

Consequently, a code-index record can be made where the subject domain code BZ is associated with these text unit *indexes,* that is:
<BZ {#2# #3# #3# #4# #5#}>

The full list of code-index records for the sample text is shown below (instances where a code occurs in a single text unit are removed as they do not represent lexical cohesion links).
<BZ {#2# #3# #3# #4# #5#}>
<CN {#2# #3# #3# #4#}>
<DA {#1# #2#}>
<F {#1# #2# #2# #3# #6#}>
<FA {#2# #5#}>
<GOV {#2# #3#}>
<IV {#4# #5#}>
<MGE {#1# #2#}>
<MI {#2# #3# #6#}>
<SCG {#2# #3# #6#}>
<TG {#1# #2#}>
<TH {#2# #3# #6#}>

The first tuplet (disregarding the disambiguation step mentioned above) is then:
<DA {#1# #2#}>
<#1# <F {#1# #2# #2# #3# #6#}>>
<MGE {#1# S2#}>
<TG {#1# #2#}>
and so on for the other tuplets.

To simplify matters, in order to illustrate the disambiguation step. rather than calculate the individual scores for each pair of text units, we shall consider only the contribution to the individual scores which is made by one of the codes, for example code BZ. The BZ components of all the tuplets are:
<#2# <BZ {#3# #3# #4# #5#}>>
<#3# <BZ {#2# #4# #5#}>>
<#4# <BZ {#2# #3# #3# #5#}>>
<#5# <BZ {#2# #3# #3# #4#}>>

Where indexes are identical with the first index of each tuplet are shown in strikethrough to indicate that they are excluded, as above.

When allowance is made for the fact that each index is associated with a particular word, the BZ components of the tuplets become:
<#2 (executive) # <BZ {#3 (business)# #4# #5#>>
<#3 (executive) # <BZ {#4# #5#}>>
<#3(business)#<BZ{#2(executive)#, #4#, #5#}>>.
<#4# <BZ {#2# #3# #3# #5#}»
<#5# <BZ {#2# #3# #3# #4#}>>

Where the disambiguation step is illustrated above by showing indexes relating to words identical with the first index of each tuplet in strikethrough to indicate that they are excluded. The final tuplets are then:
<#2 (executive) # <BZ {#3 (business)# #4# #5#>>
<#3 (executive) # <BZ {#4# #5#}>> nb. #2 (executive) # excluded.
<#3 (business) # <BZ {#2# #4# #5#}>>
<#4# <BZ {#2# #3# #3# #5#}>>
<#5# <BZ {#2# #3# #3# #4#}>>

The contribution made by BZ to the individual scores of text unit pairs are then as follows:

| | #1# | #2# | #3# | #4# | #5# | #6# |
|---|---|---|---|---|---|---|
| #1# | - | 0 | 0 | 0 | 0 | 0 |
| #2# | 0 | - | 1 | 1 | 1 | 0 |
| #3# | 0 | 1 | - | 2 | 2 | 0 |
| #4# | 0 | 1 | 2 | - | 1 | 0 |
| #5# | 0 | 1 | 2 | 1 | - | 0 |
| #6# | 0 | 0 | 0 | 0 | 0 | - |

When the same procedure is followed for certain other codes, such as DA, FA, GOV etc, no valid tuplets result. This is because the text unit indexes within the code-index records for these codes all relate to the same word. For example, the code GOV arises from the word "executive" which occurs in text units #2# and #3#, thus creating the code-index record <GOV {#2# #3#}> mentioned above. Because this code-index record does not form a valid tuplet, the "Government" sense of the word "executive" makes no contribution to the individual scores mentioned above. We have already seen that the Business sense of the word "executive", does make such a contribution, which is the desired result because it is the "Business" sense of the word which is intended in the sample text. The method thus achieves a degree of disambiguation of the subject domain codes, and rejects codes which are out of context.

Only instances where the words related to the same code differ in spelling are taken into account. This makes it possible to achieve higher precision in individuating salient themes/topics and assessing their relative importance. Taking the intersection of code sets for words with different spelling occurring in the same document tends to exclude contextually inappropriate interpretations for the words.

However, in cases where a word in the sample text is associated with only one subject code, the disambiguation step is not carried out because no disambiguation is necessary. Hence the code CN, relating to the word "say" remains.

The following table shows the text unit pairs which each code connects.

| CODES | TEXT UNIT PAIRS |
|---|---|
| BZ | 2-3 2-4 2-5 3-4 3-5 3-2 3-4 3-5 4-2 4-3 4-3 4-5 5-2 5-3 5-3 5-4 |
| F | 1-2 1-3 1-6 2-1 2-3 2-6 3-1 3-2 6-1 6-2 |
| FA | 2-5 5-2 |
| IV | 4-5 54 |
| CN | 3-4 4-3 |

Only five codes form valid tuplets, all the other codes being excluded (as described above).

In total, we have: 16 text unit pairs for BZ, 10 for F, and 2 for FA and IV and CN. These data can be used to rank text units in the sample text in terms of topic aptness by adaptation of the procedure of Figure 1.

The total of all individual scores for each subject domain code (eg. 16 for BZ, etc) can be converted into percentage ratios to provide a topic/theme profile of the text as shown in the table below:-

| | | |
|---|---|---|
| 50% | BZ | Business & Commerce |
| 31.25% | F | Finance & Business |
| 6.25% | IV | Investment & Stock Markets |
| 6.25% | FA | Overseas Politics & International Relations |
| 6.25% | CN | Communications |

For example, the percentage for BZ is calculated as 16/(16+10+2+2+2) = 50%

When used in a summarization system, the level-based differentiation of text units obtained through the ranking procedure of Figure 1 (whether based on words or on codes) can be made to provide an automatic indication of abridgement size, for example by automatic selection of all level 1 text units.

Summary size can also be specified by the user, e.g. as a percentage of the original text size, the selected text units being chosen from among the ranked text units with higher levels and higher scores.

The methods described can also be used as indexing devices in various information systems such as information retrieval and information extraction systems. For example, in a database comprising a large number of texts it is often desirable to provide a short abstract of each text to assist in both manual and computer searching of the database. The methods described above can be used to generate such short abstracts automatically.

The ranking method described above can also be applied taking into account additional ways of assessing lexical cohesion, which could be used at step 18 of Figure 1, such as:
the presence of synonyms across text units as established by consulting an electronic dictionary of synonyms;
the presence of words sharing the same semantic indicators across text units as established by consulting an electronic dictionary, as in the example with subject domain codes discussed above;
the presence of near-synonymous words across text units established by estimating the degree of semantic similarity between word pairs, as in the method disclosed in British Patent Application No.9717508.7.
the presence of anaphoric links across text units, i.e. links between a referential expression such as a pronoun or a definite description (e.g. The company in text unit #6#, and its antecedent(Apple in text unit #5#).

The same ranking method described in the preferred embodiment can also be applied by using formatting commands as indicators of the relevance of particular types of text fragments. For example, text fragments enclosed in formatting commands encoding titles and section headings such as
<h2>Report: Apple Looking for a Partner</h2>
typically contain words which can be effectively used to provide an indication of the main topic in a text. These words can be given extra weight in the above method, and thus be used to assign additional textual relevance to text units which contain them, e.g. by increasing further the lexical cohesion score of such text units during the ranking procedure described above. Formatting commands can also be selectively preserved so as to maintain as much of the page layout for the original text as possible.

The ranking method described above can also be applied by using lemmatizing instead of stemming as a word tokenization technique, or dispensing with word tokenization altogether.

The same ranking method can also be applied to texts written in a language other than English, by providing
a list of stop words for the language;
a stemmer or lemmatizer for the language; and
any additional means for assessing lexical cohesion in the language such as semantic similarity and anaphoric links

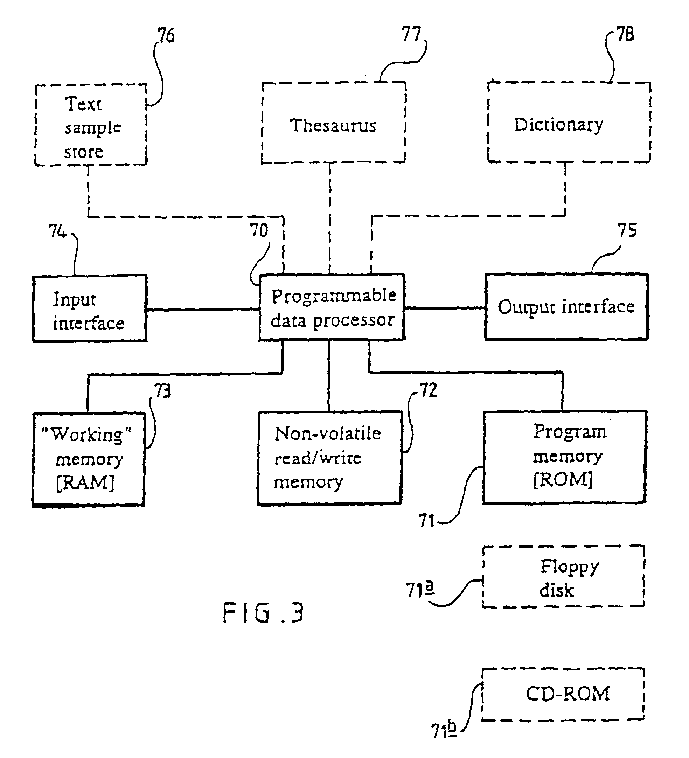

Figure 3 shows schematically a system suitable for carrying out the methods described above. The system comprises a programmable data processor 70 with a program memory 71, for instance in the form of a read only memory ROM, storing a program for controlling the data processor 70 to perform, for example, the method illustrated in Figures 1 and 2. The system further comprises nonvolatile read/write memory 72 for storing, for example, the list of stop words and the subject domain codes mentioned above. Working or scratch pad memory for the data processor is provided by random access memory (RAM) 73. An input interface 74 is provided, for instance for receiving commands and data. An output interface 75 is provided, for instance for displaying information relating to the progress and result of the procedure.

A text sample may be supplied via the input interface 74 or may optionally be provided in a machine-readable store 76. A thesaurus and/or a dictionary may be supplied in the read only memory 71 or may be supplied via the input interface 74. Alternatively, an electronic or machine-readable thesaurus 77 and an electronic or machine-readable dictionary 78 may be provided.

The program for operating the system and for performing the method described hereinabove is stored in the program memory 71. The program memory may be embodied as semiconductor memory, for instance of ROM type as described above. However, the program may be stored in any other suitable storage medium, such as floppy disc 71a or CD-ROM 71b.

### INDUSTRIAL APPLICABILITY

The use of the structures according to the present invention considerably reduces the time taken to operate on the text because it is no longer necessary to count the number of strings shared between all possible pairs of text units in turn.

More specifically, the degree of connectivity of a text unit with all other text units in a text can be simply assessed by quantifying the elements (e.g. words) which each text unit shares with pairs built by associating each element in the text with the list of pointers to the text units in which the element occurs. This provides a significant advantage in terms of processing speed when compared to a method such as the one described by Hoey (1991) and Collier (1994) where the same assessment is carried out by computing all pairwise combinations of text units. In particular, the word-per-second processing rate is significantly less affected by text size.

## Claims

1. A method of operating a data processing system on a text comprising a plurality of text units, each comprising one or more strings, the method being **characterised by**:
forming a structure for each of at least some of said strings, in which structure a string is associated with each pair of text units in which the string occurs;
for each pair of text units summing the number of occurrences of each other text unit in the same structure or structures so as to form an individual score for each pair of text units; and
processing said individual scores for each pair of text units in order to form a final score for each pair of text units to determine how many times any string is shared between each pair of text units and other text units.

2. A method of operating on a text as claimed in claim 1, which includes the further step of ranking the text units on the basis of said individual scores.

3. A method of operating on a text as claimed in claim 1, wherein said, text units are sentences, said strings are words forming said sentences, and the method comprises the additional steps of removing stop-words, stemming each remaining word and indexing the sentences prior to carrying out said summing step, and wherein said structures are stem-index records each comprising a stemmed word and one or more indexes corresponding to sentences in which said stemmed word occurs.

4. A method of operating on a text as claimed in claim 1, wherein said text is associated with a word text comprising words, each word being associated with one or more subject codes representing subjects with which said word is assoaiated, and wherein said strings are subject codes associated with said words.

5. A method of operating on a text as claimed in claim 4, which comprises the further step of keeping a record of the word spelling associated with each occurrence of a subject code in a text unit, and wherein during said summing step occurrences of the same subject code in a pair of text units are disregarded if the same word spelling is associated with said same subject code in said ,pair of text units.

6. A method of operating on a text as claimed in claim 5, wherein said step of disregarding occurrences of subject codes is not carried out for subject codes which relate to only a single word spelling in the word text.

7. A method of operating on a text as claimed in claim 1, wherein said processing step includes calculating a level for each text unit, in addition to said final score, and wherein said level indicates the value of the highest of said individual scores in relation to a threshold value.

8. A storage medium containing a program for controlling a programmable data processor (70) to perform a method as claimed in claim 1.

9. A system for ranking text unite in a text, the system comprising a data processor (70) programmed to perform the steps of the method of claim 1.

## Patentansprüche

1. Verfahren zum Bearbeiten eines Textes, der mehrere Texteinheiten umfaßt, die jeweils eine oder mehrere Zeichenfolgen umfassen, mit einem Datenverarbeitungssystem, wobei das Verfahren **gekennzeichnet ist durch**
das Bilden einer Struktur für jede von wenigstens einigen der Zeichenfolgen, wobei in der Struktur jedem Paar von Texteinheiten, in denen die Zeichenfolge auftritt, eine Zeichenfolge zugeordnet wird;
das Addieren der Anzahl, mit der für jedes Paar von Texteinheiten jede andere Texteinheit in der gleichen Struktur oder in den gleichen Strukturen auftritt, um für jedes Paar von Texteinheiten eine Einzelbewertung zu bilden; und
das Verarbeiten der Einzelbewertungen für jedes Paar von Texteinheiten, um für jedes Paar von Texteinheiten eine Abschlußbewertung zu bilden, um zu bestimmen, wie oft jede Zeichenfolge in jedem Paar von Texteinheiten und anderen Texteinheiten gemeinsam enthalten ist.

2. Verfahren zum Bearbeiten eines Textes nach Anspruch 1, das den weiteren Schritt des Einstufens der Texteinheiten anhand der Einzelbewertungen enthält.

3. Verfahren zum Bearbeiten eines Textes nach Anspruch 1, bei dem die Texteinheiten Sätze sind, während die Zeichenfolgen Wörter sind, die die Sätze bilden, wobei das Verfahren vor dem Ausführen des Schrittes des Addierens die weiteren Schritte des Entfernens von Stopwörtern, der Stammbildung jedes verbleibenden Wortes und des Indizierens der Sätze umfaßt, und wobei die Strukturen Stammindex-Datensätze sind, die jeweils ein Stammwort und einen oder mehrere Indizes umfassen, die Sätzen entsprechen, in denen das Stammwort auftritt.

4. Verfahren zum Bearbeiten eines Textes nach Anspruch 1, bei dem dem Text ein Worttext zugeordnet wird, der Wörter umfaßt, wobei jedem Wort einer oder mehrere Themencodes zugeordnet werden, die Themen repräsentieren, denen das Wort zugeordnet wird, und wobei die Zeichenfolgen den Wörtern zugeordnete Themencodes sind.

5. Verfahren zum Bearbeiten eines Textes nach Anspruch 4, das den weiteren Schritt des Aufbewahrens eines Datensatzes der Wort-Rechtschreibung enthält, der jedem Vorkommen eines Themencodes in einer Texteinheit zugeordnet ist, wobei die Vorkommen des gleichen Themencodes in einem Paar von Texteinheiten während des Schrittes des Addierens ignoriert werden, wenn dem gleichen Themencode in dem Paar von Texteinheiten die gleiche Wort-Rechtschreibung zugeordnet ist.

6. Verfahren zum Bearbeiten eines Textes nach Anspruch 5, bei dem der Schritt des Ignorierens von Vorkommen der Themencodes für Themencodes, die sich lediglich auf die Rechtschreibung eines einzelnen Wortes in dem Worttext beziehen, nicht ausgeführt wird.

7. Verfahren zum Bearbeiten eines Textes nach Anspruch 1, bei dem der Schritt des Verarbeitens außer der Abschlußbewertung das Berechnen einer Ebene für jede Texteinheit umfaßt, wobei die Ebene den Wert der höchsten der Einzelbewertungen in bezug auf einen Schwellenwert angibt.

8. Speichermedium, das ein Programm enthält, um eine programmierbare Datenverarbeitungsanlage (70) so zu steuern, daß sie ein Verfahren nach Anspruch 1 ausführt.

9. System zum Einstufen von Texteinheiten in einem Text, wobei das System eine Datenverarbeitungsanlage (70) enthält, die so programmiert ist, daß sie die Schritte des Verfahrens nach Anspruch 1 ausführt.

## Revendications

1. Procédé de mise en oeuvre d'un système de traitement de données sur un texte comprenant une pluralité d'unités de texte, comprenant chacune une ou plusieurs chaînes, le procédé étant **caractérisé par** :
la formation d'une structure pour chacune d'au moins quelques-unes desdites chaînes, structure dans laquelle une chaîne est associée à chacun des couples d'unités de texte dans lesquels apparaît la chaîne ;
pour chacun des couples d'unités de texte, la sommation du nombre d'occurrences de chacune des autres unités de texte dans la ou les même(s) structure(s) afin de constituer une valeur de dénombrement individuelle pour chaque couple d'unités de texte ; et
le traitement desdites valeurs de dénombrement individuelles pour chaque couple d'unités de texte afin de former une valeur de dénombrement finale pour chaque couple d'unités de texte afin de déterminer à combien de reprises une chaîne donnée est partagée par chacun des couples d'unités de texte et les autres unités de texte.

2. Procédé de traitement d'un texte selon la revendication 1, comprenant en outre l'étape supplémentaire consistant à classer les unités de texte sur la base desdites valeurs de dénombrement individuelles.

3. Procédé de traitement d'un texte selon la revendication 1, dans lequel lesdites unités de texte sont des phrases, lesdites chaînes sont des mots constituant lesdites phrases, et le procédé comprend les étapes supplémentaires consistant à supprimer des mots non-significatifs, à déterminer le radical de chacun des mots restants et à indexer les phrases avant de procéder à ladite étape de sommation, et dans lequel lesdites structures sont des enregistrements d'index de radicaux comprenant chacun un mot dont l'index de radical est déterminé et un ou plusieurs index correspondant à des phrases dans lesquelles apparaît ledit mot dont le radical est déterminé.

4. Procédé de traitement d'un texte selon la revendication 1, dans lequel ledit texte est associé à un texte écrit constitué de mots, chacun des mots étant associé à un ou plusieurs codes sujet représentant des sujets auxquels ledit mot est associé, et dans lequel lesdites chaînes sont des codes sujet associés auxdits mots.

5. Procédé de traitement d'un texte selon la revendication 4, comprenant l'étape supplémentaire consistant à conserver un enregistrement de l'orthographe du mot associé à chacune des occurrences d'un code sujet dans une unité de texte, et dans lequel, lors de ladite étape de sommation, les occurrences d'un code sujet identique dans un couple d'unités de texte ne sont pas prises en compte si une orthographe identique de mot est associée audit code sujet identique dans ledit couple d'unités de texte.

6. Procédé de traitement d'un texte selon la revendication 5, dans lequel ladite étape de non prise en compte des occurrences de codes sujet n'est pas mise en oeuvre pour des codes sujet relatifs uniquement à une seule orthographe de mot dans le texte écrit.

7. Procédé de traitement d'un texte selon la revendication 1, dans lequel ladite étape de traitement inclut le calcul d'un niveau pour chaque unité de texte, outre ladite valeur de dénombrement finale, et dans lequel ledit niveau indique la valeur de la plus élevée desdites valeurs de dénombrement individuelles en relation avec une valeur de seuil.

8. Support de stockage contenant un programme destiné au contrôle d'un processeur programmable de données (70) pour la mise en oeuvre d'un procédé conforme à la revendication 1.

9. Système de classement d'unités de texte dans un texte, le système comprenant un processeur de données (70) programmé pour la mise en oeuvre des étapes du procédé de la revendication 1.
